# EUROPEAN PATENT SPECIFICATION

(11) **EP 1 145 633 B1**
(45) Date of publication and mention of the grant of the patent: **25.02.2004**
(21) Application number: 00107847.6
(22) Date of filing: 12.04.2000
(51) Int. Cl.: A01N 57/20

(54) **Glyphosate compositions and their use**
Glyphosat-Zusammensetzungen und deren Verwendung
Compositions à base de glyphosate et leur utilisation

(43) Date of publication of application: 17.10.2001
(73) Proprietor: MONSANTO EUROPE S.A./N.V., B-1150 Brussels (BE)
(72) Inventor: Mitchell, Robert, 3090 Overijse (BE); Bates, Chris, Ballwin, MO 63021 (US); Scherl, Franz, 84508 Burgkirchen (DE); Zerrer, Ralf, 63791 Karlstein (DE); Bonnet, Marc, 4000 Liège 1 (BE)
(74) Representative: Bosch, Henry

(56) References cited:
- EP-A- 0 290 416
- WO-A-95/33379
- WO-A-96/32839

## Description

The present invention relates to improved herbicidal glyphosate compositions comprising a glyphosate herbicide and surfactants.

Glyphosate is a well known highly effective and commercially important non-selective systemic herbicide for combating a wide variety of unwanted vegetation, including agricultural weeds. Glyphosate is conventionally applied as a formulated product comprising the active ingredient and a surface active component, dissolved in water, to the foliage of the plants.

Usually, glyphosate is formulated in commercial compositions in the form of a water-soluble salt. Salts in commercial use include the ammonium salt, alkylamine salts, such as the isopropylamine salt, alkali metal salts, such as the sodium salt, and the trimethylsulfonium salt.

Numerous studies have been made on the effect of surfactants or surfactant combinations on the herbicidal action of glyphosate. Wyrill and Burnside, Weed Science, Vol. 25 (1977), 275-287, studied the effects of many different surfactants including examples from different classes of surfactant. Some classes of surfactant were more effective than others in enhancing the herbicidal effect of glyphosate (used as a solution of the isopropylamine salt). Wyrill and Burnside concluded that an effective surfactant is an important component of any glyphosate spray formulation.

Monsanto's well known commercial liquid formulation sold for years under the tradename Roundup® comprises, per liter of formulated product, 360 g a.e. (acid equivalent) of glyphosate in the form of its isopropylamine salt and 180 g of a tallow amine ethoxylate surfactant.

Efforts have been made in recent years to develop glyphosate compositions that show improved efficacy in general or in certain conditions, and/or which show improved environmental profiles. There also have been developed advantageous solid compositions.

EP-290 416 discloses herbicidal glyphosate compositions that contain
(a) solubilised glyphosate equivalent to at least 40 grams per litre of glyphosate acid; and
(b) a surfactant which is (i) an amine having the formula 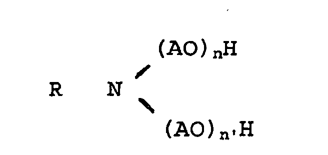
where R represents a straight- or branched- chain alkyl or alkenyl group having from about 8 to about 22 carbon atoms, A represents an alkylene group, for example an ethylene or propylene group, and n and n' are integers such that n + n' has a value of from 1 to about 12, (ii) a mixture of such amines having different groups R, the average number of carbon atoms in the groups R being from about 8 to about 22, or (iii) a mixture of such amins having different values of n and n', n and n' being integers such that in individual amines n + n' can have a value from 0 to about 15, but in the mixture the average of the sum of n + n' is from 1 to about 12, R having a single value or an average value as in a mixture (ii); and wherein the weight ratio of (a) (expressed as glyphosate acid equivalent) to (b) is from about 1:1.75 to about 6:1.

WO95/33379 discloses trialkanolamine derivatives and quaternized derivatives thereof for enhancement of the efficacy of agricultural chemicals. It more particularly discloses compounds of the formula 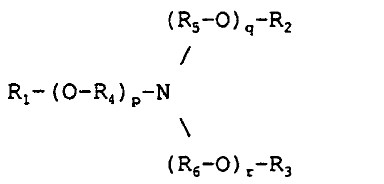 wherein R1 represents inter *alia* a linear or branched alkyl group or alkenyl group having 5 to 29 carbon atoms, R₂ and R₃ may be the same or different and each represent hydrogen or a linear or branched alkyl or alkenyl group having from 5 to 29 carbon atoms, p, q, and r may be the same or different and each represent a number of 1 to 30 in the average, and R₄, R₅ and R₆ represent alkylene groups of 2 to 4 carbon atoms, for use with agricultural chemicals. Herbicidal compositions comprising glyphosate are also disclosed. Example 1, Table 9 suggests herbicidal. compositions comprising Roundup® herbicide and a compound of the above formula wherein R₁ and R₂ are alkyl with 18 C-atoms, R₃ is hydrogen, and p, q and rare each 5.

More recently, WO96/32839 discloses herbicidal glyphosate compositions comprising an effective herbicidal activity enhancing amount of a surfactant having the chemical formula 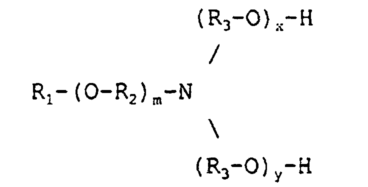 wherein x and y are average numbers such that x+y is in the range from 2 to 60; or 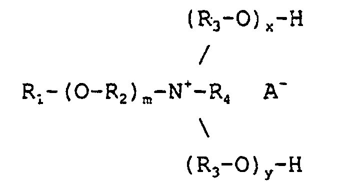 wherein x+y is in the range from 0 to 60, and A- is an agriculturally acceptable anion, R₄ is C₁-C₄ alkyl; or 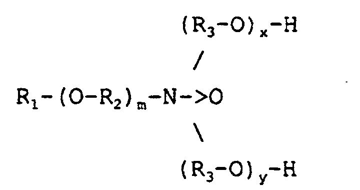 wherein x+y is in the range from 2 to 60,
and where in all the above formulae, R₁ is a straight or branched chain alkyl, aryl, or alkylaryl group having from 6 to 22 carbon atoms, m is an average number from 1 to 10, R₂ and R₃ in each of the m (O-R₂) or (R₃-O) groups is independently alkylene with 1 to 4 carbon atoms. Such compositions may show very high glyphosate concentrations ranging from 450 to 500 g a.e./l while still showing an adequate surfactant concentration. Such compositions are said to show excellent herbicidal performance and a good storage stability under a wide range of temperatures.

An aim of the present invention is to provide improved herbicidal glyphosate compositions.

Another aim of the present invention consists in providing new glyphosate formulations which show an advantageous herbicidal activity together with an acceptable environmental profile.

According to the present invention herbicidal compositions comprise
(a) glyphosate acid or an agriculturally acceptable salt or derivative thereof, and
(b) a surface active component having the formula 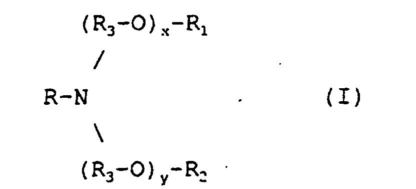 or a quaternized form thereof 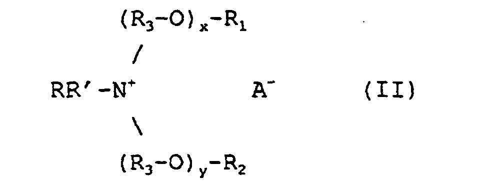 or the amine oxide derivative thereof 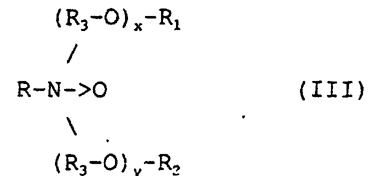
wherein R and R' represent hydrogen or alkyl having 1 to 3 carbon atoms, R1 and R2 each independently represent a straight or branched chain alkyl or alkenyl group having from 4 to 24 C-atoms, R₃ in each (R₃-O)-group may be the same or different and represents alkylene having from 2 to 4 carbon atoms, A⁻ is an agriculturally acceptable anion, and x and y are average numbers such that x+y is in the range from 2 to 160.

Such compositions show a surprisingly high degree of herbicidal efficacy compared to prior art compositions, in the sense that, at typical glyphosate/surfactant ratios, the efficacy is at least similar to, but at increased glyphosate/surfactant ratios is drastically improved over, conventional surfactant(s) containing compositions. Invention compositions show similar performance or biological effect to prior art compositions, with the advantage of using higher glyphosate/surfactant ratios. As a result, compositions of the invention may contain higher concentrations of glyphosate and be economically more interesting.

As used herein, "glyphosate" means N-phosphono-methylglycine in its acid form as well as in any salt form or derivative of glyphosate which in aqueous solution provides glyphosate anions along with suitable cation. Glyphosate includes the isopropylamine salt of glyphosate and other agriculturally acceptable salts of glyphosate such as those disclosed in US Patent 3,799,758.

Surfactants as defined hereabove are known to the person skilled in the art and may be prepared by ammonolys-is of the corresponding alcohol (alkoxylated or not) with ammonia and a suitable catalyst. According to that method of preparation, the relevant alcohol or an alcohol mixture is heated in the presence of a suitable catalyst, such as for example a nickel catalyst, to a temperature ranging from 130 to 220 degrees C, preferably to about 190 degrees C, while flushing with nitrogen. Ammonia and hydrogen are then added continuously at a proportion of 5 to 1 to 1 to 2 by volume, preferably around 3 to 1. The pressure.of the reaction medium can be varied from normal-pressure to medium pressure conditions of approximately 20 bar. The resultant surfactant is obtained after 9 to 20 hours, after distillation of the reaction water. After the reaction is completed, the product is cooled to room temperature, the catalyst is filtered off and the product is degassed in an evaporator. The product obtained may the further be reacted according to standard procedures in view of desirable alkoxylation, methylation, oxidation or quaternization.

In the compositions of the invention, the weight ratio of glyphosate (expressed as glyphosate acid equivalent) to the total surface active component can vary over a considerable range, for example from 1:5 to 20:1. The optimum ratio will vary according to the manner and conditions in which the herbicidal composition is applied, the weed species to be treated, and the particular surfactant used, but is normally higher than 1:1, preferably higher than 2:1, more particularly higher than 5:1. Compositions of the invention are so advantageously effective that compositions with unexpectedly high' glyphosate a.e./surfactant ratios of the order of 20:1 or 15:1 still give good results. Compositions' having a glyphosate a.e. to surfactant ratio of 8:1, 10:1 or 12:1 are particularly preferred. Such compositions show an acceptable commercial control of undesired plants similar to current commercial and prior art compositions while containing a reduced surfactant level.

A composition of the invention can be a liquid concentrate intended to be diluted with water to form a spray solution for the herbicidal application. A liquid concentrate will normally contain at least 50 grams glyphosate acid equivalent per litre, and preferably at least 200 g/l, up to 600 g/l but in certain cases, more diluted ready to use formulations may contain glyphosate concentrations of about 2 to 20 g/l. Compositions containing 300 to 600 g/l or 400 to 550 g/l are preferred.

In another form, a composition of the invention is a solid, for example a free-flowing particulate, granular solid or compressed into tablets or briquettes of any desired size and shape. Such compositions will usually contain,not more than 5% and preferably not more than 1% by weight of water. Solid compositions may be formulated to include a water-soluble inert carrier, and for this purpose ammonium salts such as ammonium sulphate may be particularly suitable (see below). The weight ratio of glyphosate (expressed as glyphosate acid equivalent) to surface active component in such compositions will be within the general range mentioned above. The amount of water-soluble inert carrier is not critical, and in the case of ammonium sulphate, the amount may, for example, range from 0% to 80% of the total weight of the composition. A dry composition normally contains at least 5 - 80 % w/w glyphosate acid equivalent. Solid compositions can be made, for example by spray drying an aqueous solution of the components, by dry-blending the ingredients in conventional granulating apparatus, or by extrusion blending whereby a granular product is obtained in an essentially single operation.

Compositions of the invention also include spray solutions. In these solutions, the concentration of glyphosate is selected according to the volume per unit area of spray solution to be used and the desired rate of application of glyphosate per unit area. For example, conventional spraying is done at 50-800 litres of spray solution per hectare, and the rate of application of glyphosate is typically 0.125 to 4 kg of glyphosate acid equivalent per hectare. In controlled drop spraying, the rate of application of glyphosate per hectare will normally be within the same range, but the volume of spray solution per hectare will be considerably less, perhaps 15-50 litres per hectare. Spray solutions for controlled drop spraying are therefore more concentrated than those used in conventional spraying.

Spray solution compositions can be prepared by diluting liquid concentrates or dissolving solid compositions of this invention as described above, or by tank mixing the separate components of the claimed compositions.

Compositions of the invention may include a significant amount of an agriculturally-acceptable inorganic ammonium salt such as ammonium nitrate, ammonium thiocyanate, ammonium thiosulfate, ammonium phosphate, ammonium chloride, preferably ammonium sulphate, in addition to the glyphosate herbicide and surface active component.

Compositions of the invention, more particularly formulated concentrate compositions of the invention may further contain other adjuvants like formulation aids, such as extrusion aids, dyes, thickeners, defoamers, such as silicon based defoamers, stabilizers, anti-freeze agents such as ethylene glycol and other surfactants, or even other pesticidal actives, as may be determined by the person skilled in the art.

Preferably R1 and R2 each independently represent a straight or branched chain alkyl or alkenyl group having from 8 to 18 carbon atoms.

Surfactants corresponding to formula (I) are preferred. Most preferred are surfactants of formula (I) wherein R1 and R2 each independently are a straight or branched chain alkyl or alkenyl group having 12 to 18 carbon atoms.

x+y may range from 2 to 160 or even more while maintaining the good efficacy of the surfactant in the invention compositions. An advantageous alkoxylation degree ranges from x+y = 4 to 100, preferably 6 to 50. In certain instances, depending on the actual chemical structure of the surfactant, an alkoxylation degree of x+y comprised between 8 and 20, or 10 to 20 or preferably 12 to 20 has shown particularly advantageous.

Another embodiment pertaining to the present invention includes an adjuvant for agricultural compositions, more particularly herbicidal glyphosate compositions, which comprises a surface active component as per formulae (I) to (III).

Adjuvant compositions of the invention, similarly to the herbicidal compositions of the invention as described above can optionally contain other components.

The concentrates and solutions of the invention may also be mixed with other pesticides. Preferably though not required such other herbicides, insecticides or fungicides have low irritancy and toxicity.

Yet another aspect of the present invention is a method of use of compositions described above for the control of unwanted vegetation.

The invention will be described in more detail hereafter with reference to examples.

### EXAMPLE 1

A solid composition (cmps 1) according to the invention was prepared as follows:

Ammonium salt of glyphosate (MON8750 powder), surfactant of formula C₁₂₋₁₈H₂₅₋₃₇- (OCH₂CH₂)₅-NH- (CH₂CH₂O)₅-C₁₂₋₁₈H₂₅₋₃₇ (surfactant 1) and Rhodorsil 432 (tradename) antifoam were blended in that order at room temperature in a Hobart planetary mixer. Water was then added and mixing continued until a dough is formed with a consistency suitable for extrusion. The dough mixture was charged into a Fuji Paudal EXDS-60 extruder fitted with a 0.7 mm radial screen. The extruded granules were dried using an Aeromatic Strea-1 fluid bed dryer controlled at approx 50 degrees C for approx 30 minutes, and sieved on an Endecotts EFL MK3 sieve shaker. Fines of <0.3mm and oversize >2.0mm in size were removed by the sieving process and discarded. The final product was comprised of free flowing, non-dusty off white coloured granules.

| | |
|---|---|
| ammonium glyphosate (MON8750 powder) | 89.81 %w/w |
| surfactant N. 1 | 9.70 |
| Rhodorsil 432 | 0.49 |

The product had an initial residual moisture content of < 1 % w/w.

Details of storage stability test results can be seen in the table below. Assay of the formulation indicated no loss of glyphosate active ingredient after one month at 54 degrees C compared to a sample stored at -18 degrees C for the same period. The formulation was found not to foam on dilution when tested according to method CIPAC MT47.2 at a concentration of 6.4g product in 230ml of water. The dissolution and solution stability was tested according to CIPAC method MT179 at a concentration of 6.9g of formulation in 250ml of water; both initially and after storage for two weeks at 54 degrees C the formulation was found to dissolve within the specified 5 minutes and the solution thus formed exhibited no precipitation or phase separation after 18 hours.

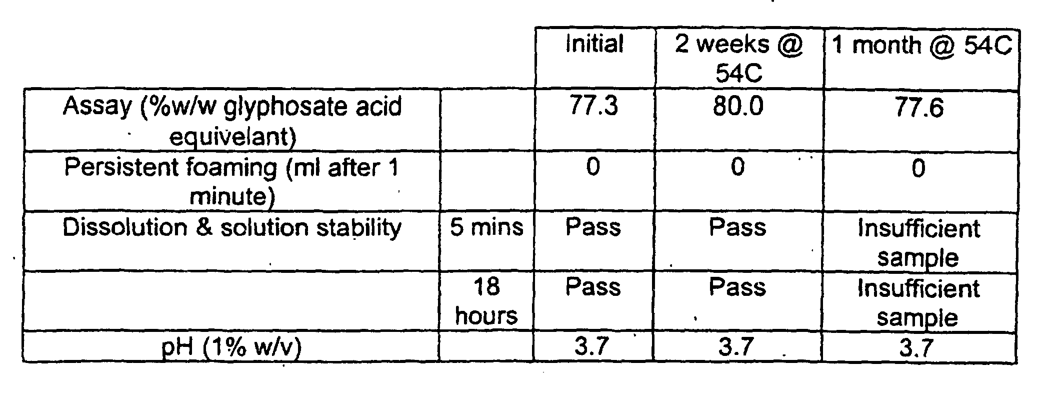

### EXAMPLE 2

The herbicidal efficacy of the composition of Example 1 was evaluated in a greenhouse test, in comparison with prior art compositions:
■ cmps a, commercial Roundup® comprising 360 g/l glyphosate a.e. and 180 g/l tallow amine ethoxylate (15 EO) based surfactant;
■ cmps b, commercial glyphosate composition sold under the tradename Roundup® Bioforce® in France, comprising 360 g/l glyphosate a.e. and 180 g/l of a surfactant composition comprising a propoxylated quaternary ammonium surfactant as per Example 6 of EP-0 441 764;
■ cmps c, a soluble liquid comprising 81.80% w/w isopropylamine salt of glyphosate (grade 205 - 46 %w/w of glyphosate acid equivalent) and 7.53 %w/w surfactant as per WO96/32839 (having the amine structure wherein R1 is a branched alkyl chain having 11 - 14 C-atoms, R2 is isopropyl, m is 1, R3 is ethylene oxide and x+y is 5.

The rates of application of this test were equivalent to 240, 480, 720 and 960 g a.e./ha.

Agropyron repens (AGRRE - narrow leaf) and Raphanus sativus (RAPSA - broadleaf) plants were grown from seed in 10 cm pots containing a natural sandy loam soil. The pots were placed in a growth-room until the spraying with a precise relative humidity as well as temperature control. After spraying plants were transferred to a greenhouse where light and temperature were also well controlled. Plants remained in this greenhouse for the remainder of the experiment. Both in growth-room and in the greenhouse, the water was supplied from below the pots by an automatic irrigation system.

Plants reached the appropriate growth stage for spraying around 3-4 weeks after sowing. Before spraying, pots were selected for uniformity as far as possible and atypical pots were discarded.

Glyphosate compositions were applied post-emergence with a precision laboratory sprayer (IMAG-DMLO), delivering a volume of 200 1/ha solution through "Flat Even" nozzles (11003) in a single pass. All compositions were diluted in water. All replicate pots (4 pots per treatment) were sprayed with one pass of the sprayer.

Pots were distributed randomly in the growth room after treatment. Untreated control pots were placed at random among treated pots.

Assessment of per cent phytotoxicity was made by comparison with untreated control pots on an arbitrary scale from 0 to 100%, where 0 means no visible effect and 100 means death of all plants.

The results are presented as average values of four replicates and three assessments at 24 days after treatment.

**TABLE 1A:**

| Efficacy on RAPSA | | | | |
|---|---|---|---|---|
| Rate (g a.e./ha) | 240 | 480 | 720 | 960 |
| Composition a | 55 | 89 | 75 | 85 |
| b | 53 | 70 | 80 | 81 |
| c | 63 | 73 | 81 | 89 |
| 1 | 65 | 83 | 92 | 87 |

**TABLE 1B:**

| Efficacy on AGRRE | | | | |
|---|---|---|---|---|
| Rate (g a.e./ha) | 240 | 480 | 720 | 960 |
| Composition a | 25 | 69 | 85 | 92 |
| b | 23 | 54 | 84 | 91 |
| c | 28 | 73 | 91 | 97 |
| 1 | 26 | 64 | 85 | 91 |

As can easily be seen from the above, all compositions provide similar performance, with no significant statistical difference between them, although the invention composition comprises far less surfactant than the prior art compositions.

### EXAMPLE 3

In this Example, the following surfactants were used:

| R₁=R₂= | (R₃-O) =EO x+y= | R | surfactant N. |
|---|---|---|---|
| sat., branched C13 (isotridecyl) | 16 | H | 2 |
| | 30 | H | 3 |
| | | | |
| sat., linear C16/18 (tallow) , | 16 | H | 5 |
| | 16 | CH3 | 6 |
| | 40 | H | 8 |
| | | | |
| unsat., linear, C16/18 (oleyl) | 16 | H | 9 |
| | 40 | H | 10 |
| | | | |
| sat., C24 (guerbet) | 40 | H | 11 |
| Surfactant N.4 corresponds to the formula RN [ (EO)ₓ, (PO)ₓ₋R₁]₂ wherein x'=3 and x"=3, 'R is H and R₁ is isotridecyl. | | | |
| Surfactant N.7 corresponds to a quaternized compound according to formula (II) wherein R is CH₃, R' is CH₃, R₃ is ethylene, x + y is 16, and R₁ is a saturated, linear alkyl chain from tallow. | | | |

The tested compositions were tank mixed compositions comprising isopropylamine salt of glyphosate and the relevant surfactant in a ratio of 5:1.

Glyphosate was applied at dose rates of 360, 720 and 1080 g a.e./ha following essentially the procedure as detailed in Example 2. Plant species tested were Elymus repens (narrowleaf), Raphanus sativus (broadleaf), Ipomea purpurea (broadleaf). Phytotoxicity was evaluated and recorded at 6, 18, and 25 days after treatment (DAT).

The results are presented as average values of four replicates at the dose rates and DAT as indicated.

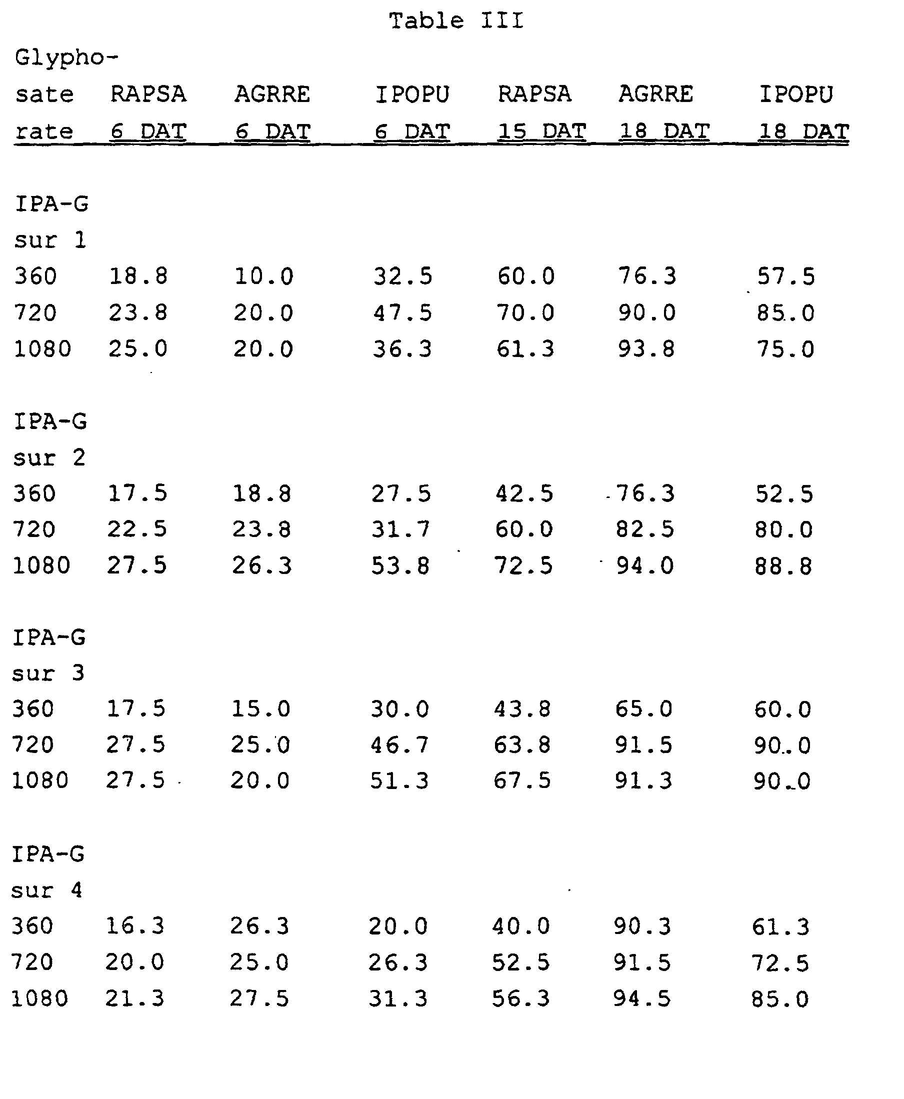

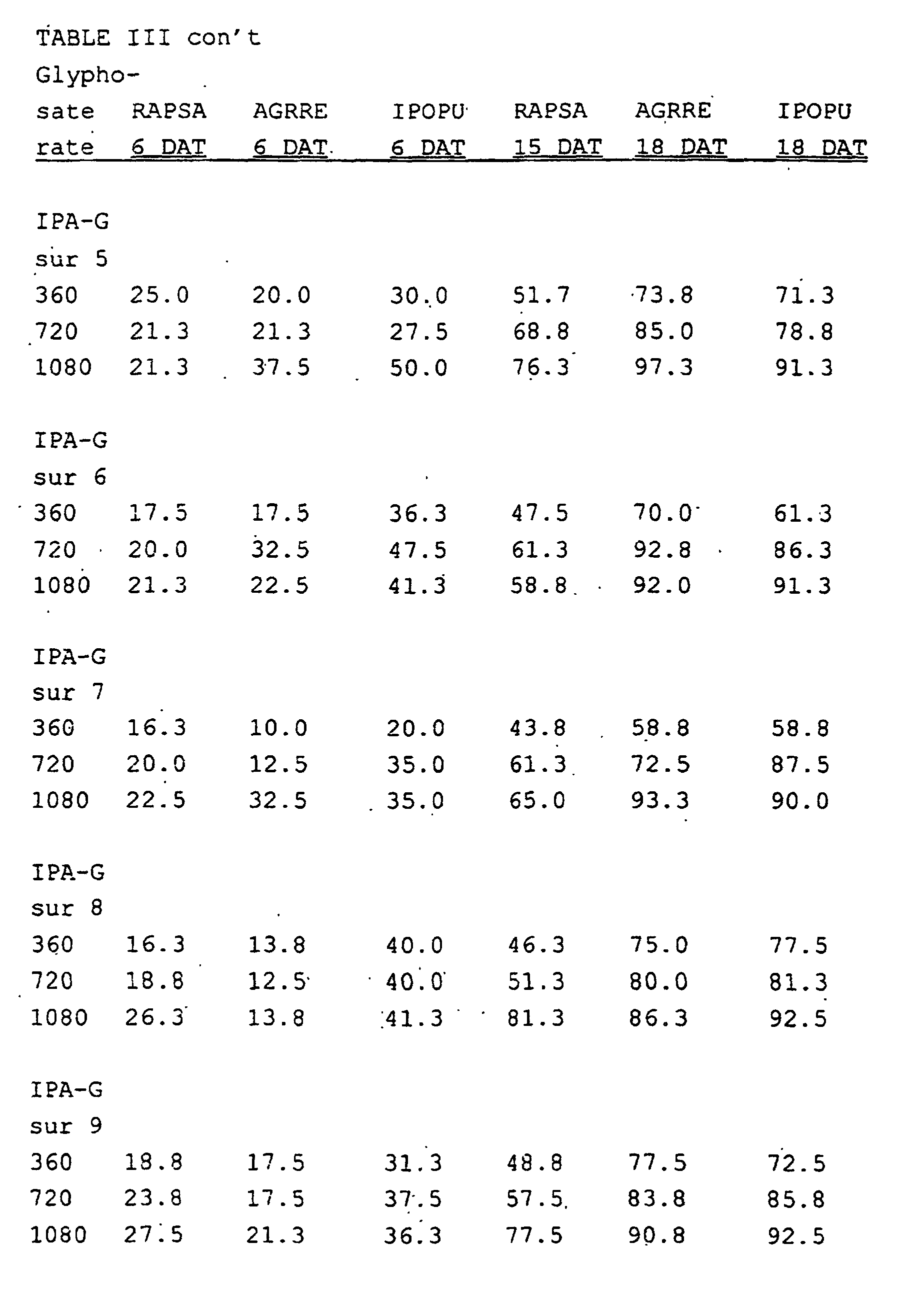

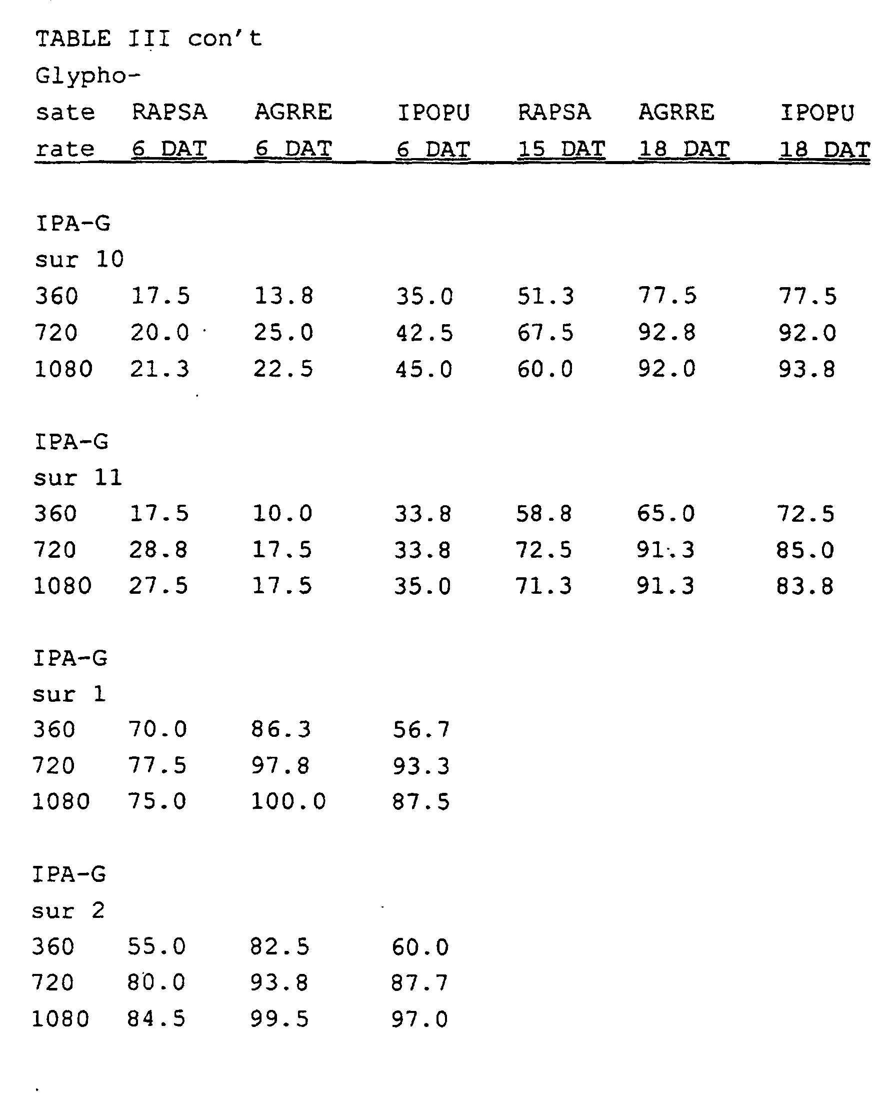

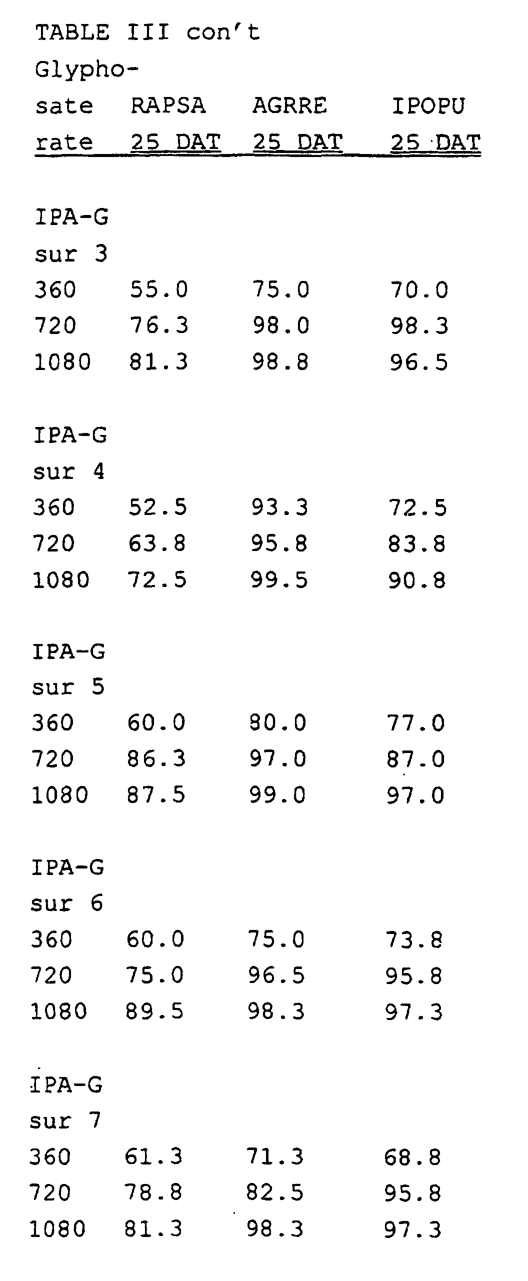

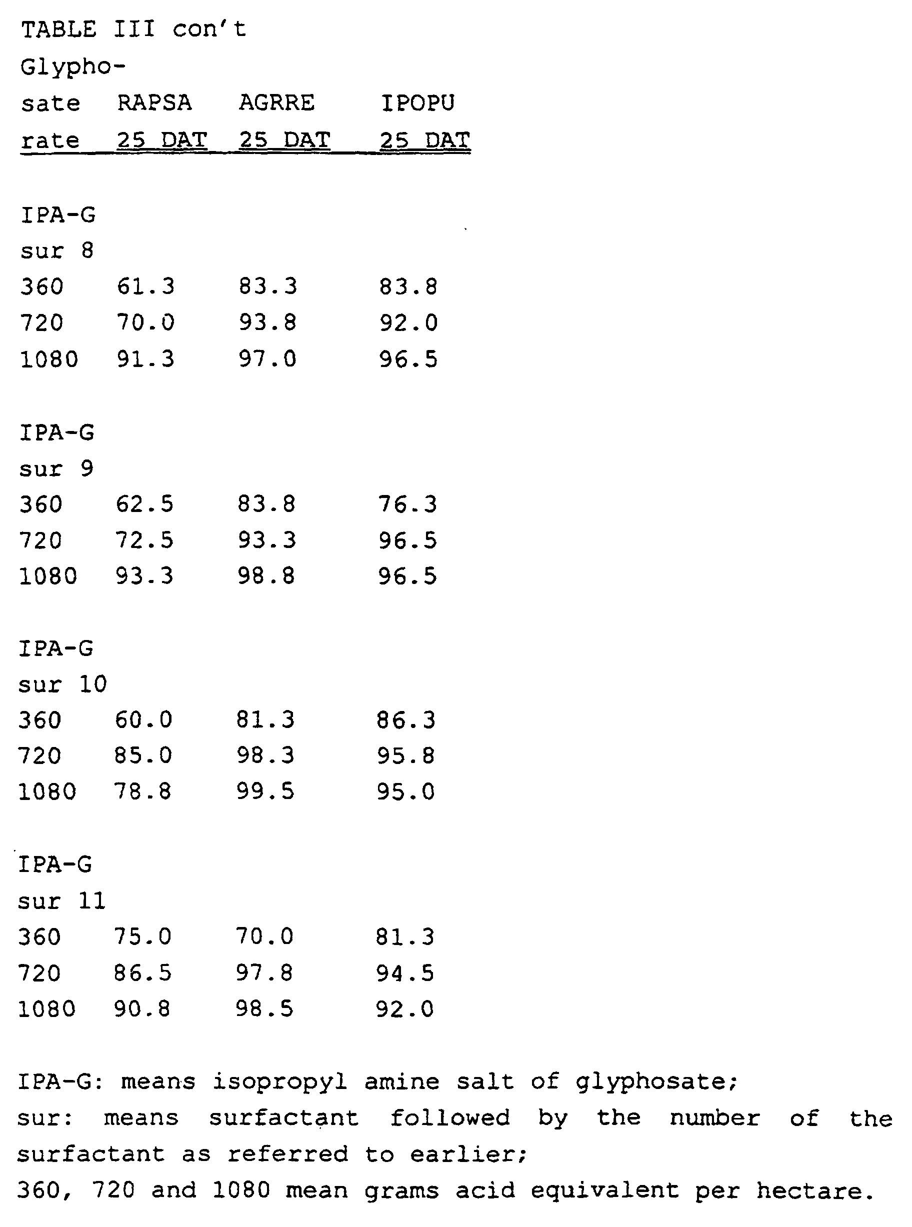

This Example shows that, at glyphosate a.e./surfactant ratios of 5/1, all these invention compositions perform very well and to a similar extent.

### EXAMPLE 4

A similar test was performed according to essentially the same protocol, except that evaluations were made as indicated (DAT).

Compositions tested were as follows:
■ composition a, as defined in Example 2;
■ composition b, as defined in Example 2;
■ composition c, as defined in Example 2;
■ a tank mix comprising a 10/1 ratio of glyphosate isopropylamine salt and surfactant 1;
■ a tank mix comprising a 10/1 ratio of glyphosate isopropylamine salt and surfactant 3;
■ a tank mix comprising a 10/1 ratio of glyphosate isopropylamine salt and surfactant 4;
■ a tank mix comprising a 10/1 ratio of glyphosate isopropylamine salt and surfactant 5;
■ a tank mix comprising a 10/1 ratio of glyphosate isopropylamine salt and surfactant 9;
■ a tank mix comprising a 10/1 ratio of glyphosate isopropylamine salt and surfactant 11.
■ a tank mix composition comprising isopropylamine salt of glyphosate and surfactant N. 12 (R1=R2= C24 guerbet, (R3-O) is EO, x+y=160, and R=H) in a ratio of 10:1;

The test results are summarized in Table IV below.

**TABLE IV**

| Glyphosate rate | RAPSA 11 DAT | IPOPU 11 DAT | AGRRE 18 DAT | RAPSA 26 DAT | AGRRE 2.6 DAT | IPOPU 27 DAT |
|---|---|---|---|---|---|---|
| cps a | | | | | | |
| 360 | 35.0 | 21.3 | 37.5. | 65.0 | 52.5 | 38.8 |
| 720 | 56.3 | 41.3 | 60.0 | 82.5 | 73.8 | 63.8 |
| 1080 | 62.5 | 38.8 | 75.0 | 85.0 | 80.0 | 67.5 |
| | | | | | | |

| cps b | | | | | | |
|---|---|---|---|---|---|---|
| 360 | 28.8 | 30.0 | 41.3 | 52.5 | 51.3 | 50.0 |
| 720 | 37.5 | 17.5 | 71.3 | 70.0 | 77.5 | 57.5 |
| 1080 | 43.8 | 55.0 | 85.0 | 76.3 | 83.8 | 73.8 |
| | | | | | | |

| cps c | | | | | | |
|---|---|---|---|---|---|---|
| 360 | 27.5 | 13.8 | 42.5 | 42.5 | 50.0 | 35.0 |
| 720 | 43.8 | 37.5 | 72.5 | 73.8 | 81.3 | 53.8- |
| 1080 | 52.5 | 40.0 | 82:5 | 82.5 | 86.3 | 73.8 |
| | | | | | | |

| IPA-G sur 12 | | | | | | |
|---|---|---|---|---|---|---|
| 360 | 41.3 | 16.3 | 31.3 | 63.8 | 37.5 | 41.3 |
| 720 | 45.0 | 51.3 | 45.0 | 83.8 | 53.8 | 61.3 |
| 1080 | 56.3 | 33.8 | 53.8 | 80.0 | 70.0 | 65.0 |
| | | | | | | |

| IPA-G sur 1 | | | | | | |
|---|---|---|---|---|---|---|
| 360 | 33.8 | 17.5 | 36.3 | 58.8 | 42.5 | 38.8 |
| 720 | 48.8 | 35.0 | 52.5 | 72.5 | 71.3 | 60.0 |
| 1080 | 50.0 | 55.0 | 73.8 | 78.8 | 83.8 | 68.8 |

| IPA-G sur 3 | | | | | | |
|---|---|---|---|---|---|---|
| 360 | 33.8 | 25.0 | 30.0 | 53.8 | 53.0 | 41.3 |
| 720 | 46.3 | 36.3 | 46.3 | 72.5 | 61.3 | 57.5 |
| 1080 | 55.0 | 42.5 | 68.8 | 82.5 | 78.8 | 65.0 |
| | | | | | | |

| IPA-G sur 4 | | | | | | |
|---|---|---|---|---|---|---|
| 360 | 30.0 | 17.5 | 30.0 | 43.8 | 31.3 | 31.3 |
| 720 | 40.0 | 27.5 | 38.8 | 65.0 | 50.0 | 40.0 |
| 1080 | 50.0 | 41.3 | 60.0 | 78.8 | 71.3 | 58.8 |
| | | | | | | |

| IPA-G sur 5 | | | | | | |
|---|---|---|---|---|---|---|
| 360 | 37.5 | 16.3 | 31.3 | 65.0 | 33.8 | 30.-0 |
| 720 | 47.5 | 25.0 | 48.8 | 76.3 | 62.5 | 41.3 |
| 1080 | 55.0 | '38.8 | 42.5 | 85.0 | 56.3 | 62.5 |
| | | | | | | |

| IPA-G sur 9 | | | | | | |
|---|---|---|---|---|---|---|
| 360 | 37.5 | 37.5 | 33.8 | 66.3 | 46.3 | 56.3 |
| 720 | 43.8 | 36.3 | 48.8 | 72.5 | 58.8 | 67.5 |
| 1080 | 61.3 | 48.8 | 76.3 | 83.8 | 82.5 | 73.8 |
| | | | | | | |

| IPA-G sur 11 | | | | | | |
|---|---|---|---|---|---|---|
| 360 | 46.3 | 17.5 | 35.0 | 73.8 | 45.0 | 33.8 |
| 720 | 50.0 | 20.0 | 48.8 | 81.3 | 62.5 | 45.0 |
| 1080 | 45.0 | 33.8 | 48.8 | 76.3 | 62.5 | 58.8 |
| IPA-G means isopropylamine salt of glyphosate; sur means surfactant followed by the surfactant number which refers to the corresponding surfactant definition; 360, 720 and 1080 are the glyphosate acid equivalent dose rates applied, expressed in grams/ha. | | | | | | |

This example shows that at glyphosate a.e./surfactant ratios as high as 10:1 the compositions of the invention perform unexpectedly well, and as good as prior art compositions with ratios of 5:1 or 2:1.

### EXAMPLE 5

A similar test was performed according to essentially the same protocol.

The tested compositions were prior art compositions a, b and c, and tank mixed compositions comprising isopropylamine salt of glyphosate and the relevant surfactant in a ratio of 5:1.

The surfactants used in this test are as follows:

| R₁=R₂= | (R₃-O) =EO x+y= | R | surfactant N. |
|---|---|---|---|
| sat., linear C8/10 | 16 | H | 13 |
| | 20 | H | 14 |
| | | | |
| sat., linear C12/18 | 20 | H | 15 |
| | 16 | H | 16 |
| | | | |
| sat., linear C8/10 | 10 | H | 17 |

Glyphosate was applied at dose rates of 360, 720 and 1080 g a.e./ha following essentially the procedure as detailed in Example 2. Plant species tested were Elymus repens (narrowleaf), Raphanus sativus (broadleaf), Ipomea purpurea (broadleaf). Phytotoxicity was evaluated and recorded at 6, 17, and 25 days after treatment (DAT).

The results are presented as average values of four replicates at the dose rates and DAT as indicated on each Table.

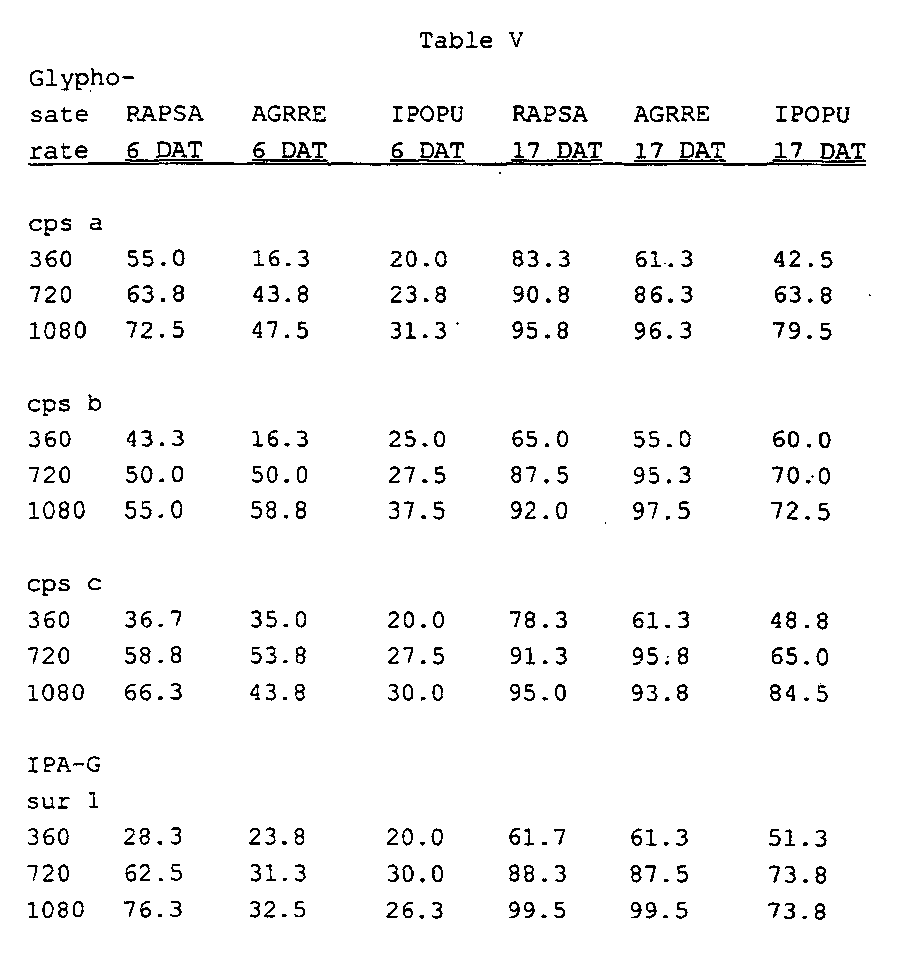

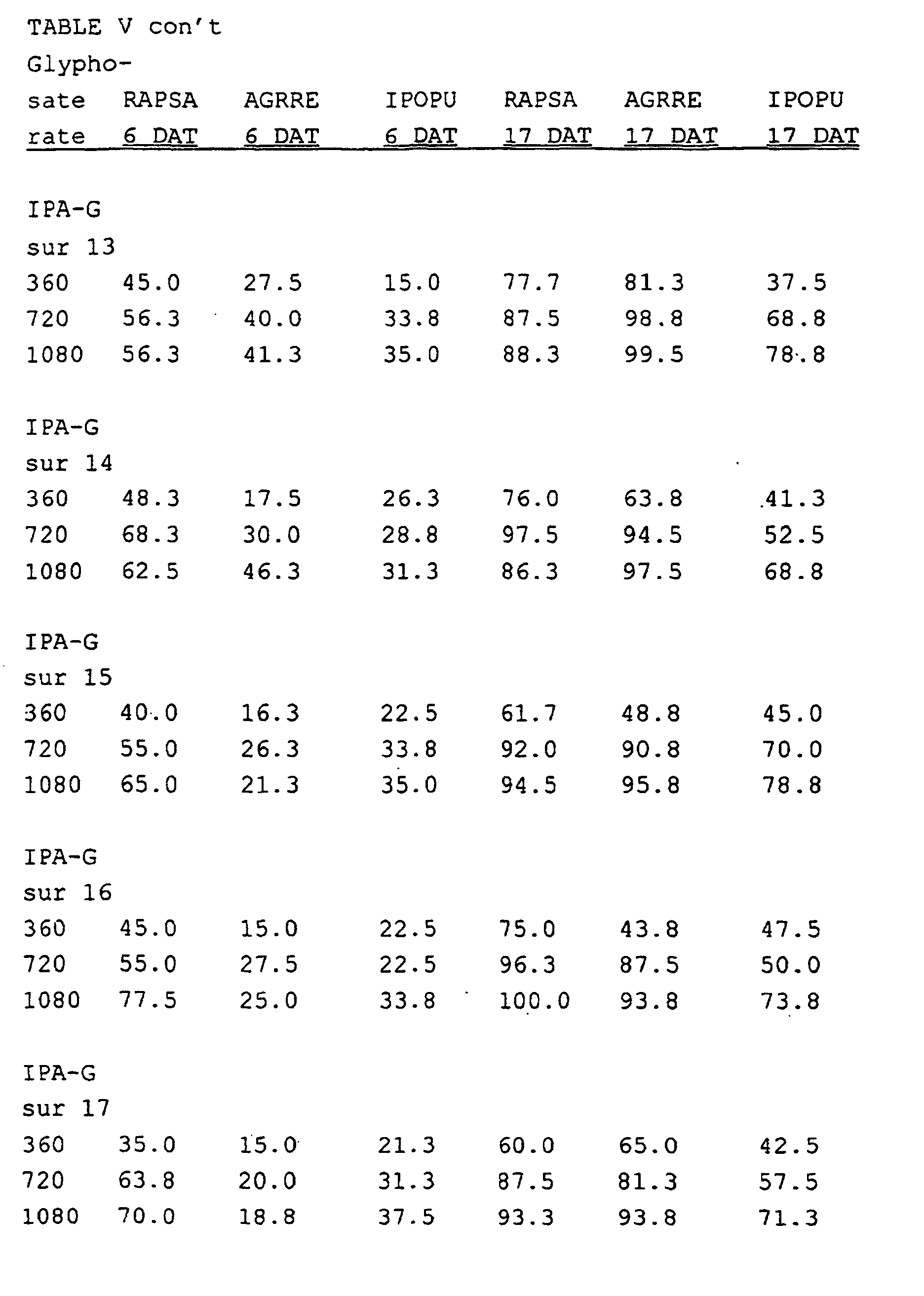

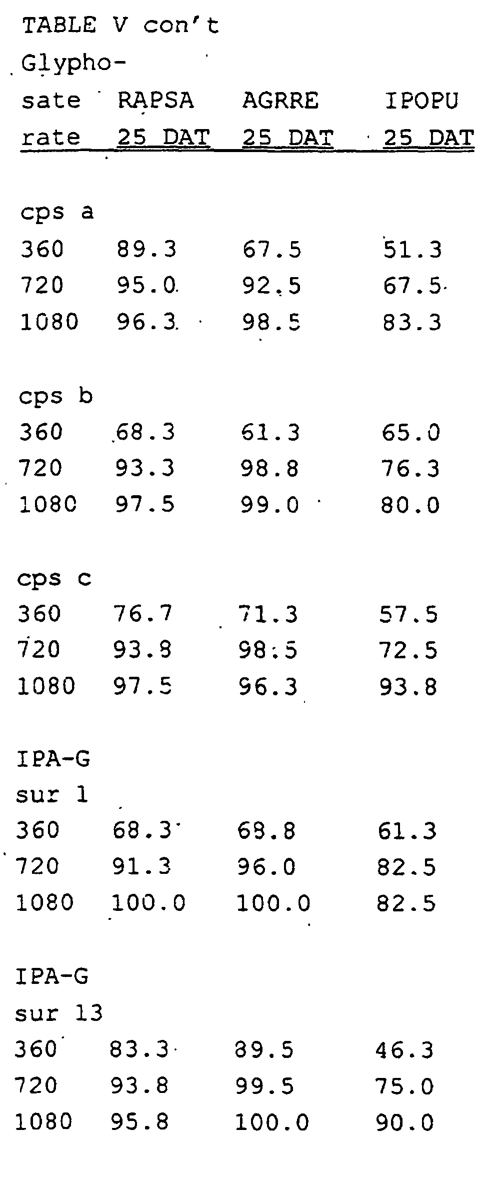

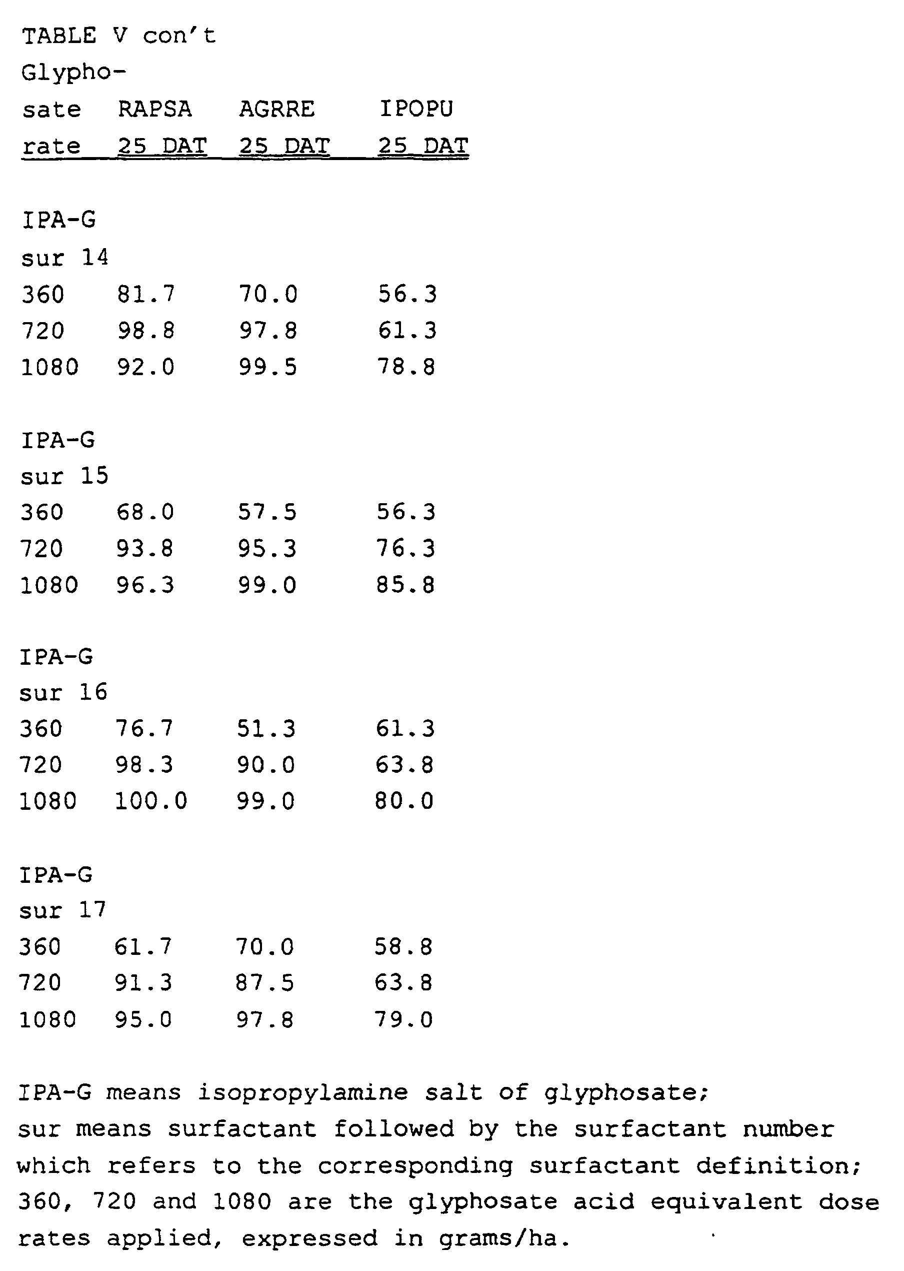

This example shows that at glyphosate a.e./surfactant ratios of 5:1 the compositions of the invention perform unexpectedly well compared to prior art compositions with ratios of 5:1 or 2:1.

## Claims

1. Herbicidal composition comprising:
(a) glyphosate acid or an agriculturally acceptable salt or derivative thereof, and
(b) a surface active component having the formula 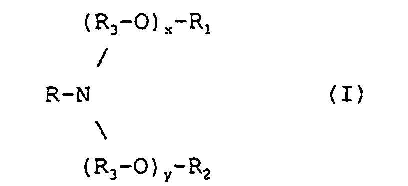 or a quaternized form thereof 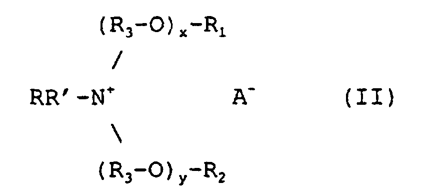 or the amine oxide derivative thereof 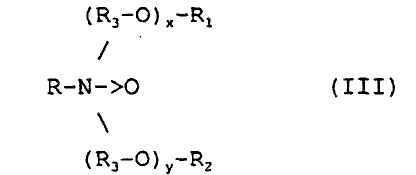
wherein R and R' represent hydrogen or alkyl having 1 to 3 carbon atoms, R1 and R2 each independently represent a straight or branched chain alkyl or alkenyl group having from 4 to 24 C-atoms, R₃ in each (R₃-O)-group may be the same or different and represents alkylene having from 2 to 4 carbon atoms, A⁻ is an agriculturally acceptable anion, and x and y are average numbers such that x+y is in the range from 2 to 160.

2. Composition according to Claim 1 wherein R1 and R2 represent a straight or branched chain alkyl or alkenyl group having from 8 to 18 C-atoms.

3. Composition according to Claim 1 or 2 wherein the surfactant is a surfactant according to formula (I).

4. Composition according to Claim 3 where in the surfactant formula R1 and R2 each independently represent a straight or branched chain alkyl or alkenyl group having from 12 to 18 C-atoms.

5. Composition according to any preceding Claim where in the surfactant formula x+y ranges from 4 to 100, preferably from 6 to 50.

6. Composition according to any preceding Claim where the weight ratio of glyphosate (expressed as glyphosate acid equivalent) to the total surface active component ranges from 1:5 to 20:1.

7. Composition according to Claim 6 wherein the weight ratio of glyphosate (expressed as glyphosate acid equivalent) to the total surface active component is higher than 1:1, preferably higher than 2:1, more particularly higher than 5:1.

8. Composition according to Claim 7 wherein the glyphosate a.e./surfactant ratio is as high as 15:1.

9. Composition according to any of claims 6 to 8 wherein the weight ratio of glyphosate (expressed as glyphosate acid equivalent) to the total surface active component is about 8:1, 10:1 or 12:1.

10. Adjuvant composition comprising a surfactant as defined in any of Claims 1 to 5, possibly together with other adjuvants, like solvent or diluent such as water or a lower alcohol, such as isopropanol or glycol, inorganic ammonium salt, dyes, thickeners, stabilizers and/or other surfactants.

11. Use of a composition according to any of Claims 1 to 9 for the control or kill of unwanted vegetation.

12. Use of an adjuvant composition according to Claim 10 for the preparation of a herbicidal composition according to any of Claims 1 to 9.

## Patentansprüche

1. Herbizide Zusammensetzung, umfassend:
(a) Glyphosatsäure oder ein landwitschaftlich annehmbares Salz oder Derivat hiervon, und
(b) eine oberflächenaktive Komponente der Formel 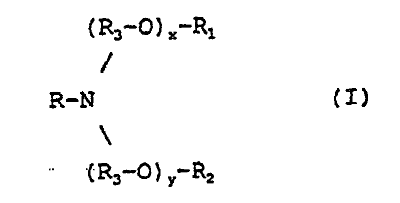 oder eine quaternisierte Form hiervon, 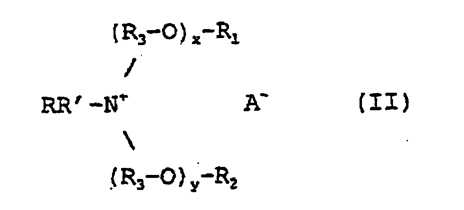 oder das Aminoxidderivat hiervon, 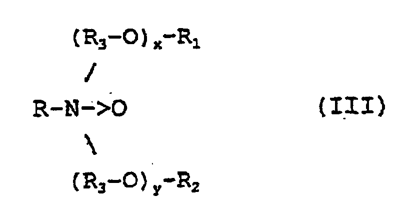
worin R und R' Wasserstoff oder Alkyl mit 1 bis 3 Kohlenstoffatomen bedeuten, R₁ und R₂ jeweils unabhängig eine gerade oder verzweigtkettige Alkyl- oder Alkenylgruppe mit 4 bis 24 C-Atomen bedeuten, R₃ in jeder (R₃-O)-Gruppe gleich oder verschieden sein kann und ein Alkylen mit 2 bis 4 Kohlenstoffatomen bedeutet, A⁻ ein landwirtschaftlich annehmbares Anion ist, und x und y durchschnittliche Zahlen sind, so dass x+y im Bereich von 2 bis 160 liegt.

2. Zusammensetzung nach Anspruch 1, wobei R₁ und R₂ eine gerade oder verzweigtkettige Alkyl- oder Alkenylgruppe mit 8 bis 18 C-Atomen bedeuten.

3. Zusammensetzung nach Anspruch 1 oder 2, wobei das Tensid ein Tensid der Formel (I) ist.

4. Zusammensetzung nach Anspruch 3, wobei in der Tensidformel R₁ und R₂ jeweils unabhängig eine gerade oder verzweigtkettige Alkyl- oder Alkenylgruppe mit 12 bis 18 C-Atomen bedeuten.

5. Zusammensetzung nach mindestens einem vorangehenden Anspruch, wobei in der Tensidformel x+y im Bereich von 4 bis 100, vorzugsweise 6 bis 50, liegt.

6. Zusammensetzung nach mindestens einem vorangehenden Anspruch, wobei das Gewichtsverhältnis von Glyphosat (ausgedrückt als Glyphosatsäureäquivalent) zu der gesamten oberflächenaktiven Komponente im Bereich von 1:5 bis 20:1 liegt.

7. Zusammensetzung nach Anspruch 6, wobei das Gewichtsverhältnis von Glyphosat (ausgedrückt als Glyphosatsäureäquivalent) zu der gesamten oberflächenaktiven Komponente höher als 1:1, vorzugsweise höher als 2:1, weiter vorzugsweise höher als 5:1, liegt.

8. Zusammensetzung nach Anspruch 7, wobei das Glyphosatsäureäquivalent/Tensid-Verhältnis so hoch wie 15:1 ist.

9. Zusammensetzung nach mindestens einem der Ansprüche 6 bis 8, wobei das Gewichtsverhältnis von Glyphosat (ausgedrückt als Glyphosatsäureäquivalent) zu der gesamten oberflächenaktiven Komponente etwa 8:1, 10:1 oder 12:1 beträgt.

10. Adjuvanszusammensetzung, umfassend ein Tensid, wie in mindestens einem der Ansprüche 1 bis 5 definiert, wahlweise zusammen mit anderen Adjuvantien, wie Lösungsmittel oder Verdünnungsmittel, wie Wasser oder ein niederer Alkohol, wie etwa Isopropanol oder Glykol, anorganisches Ammoniumsalz, Farbstoffe, Verdickungsmittel, Stabilisatoren und/oder andere Tenside.

11. Verwendung einer Zusammensetzung nach mindestens einem der Ansprüche 1 bis 9 zur Bekämpfung oder Abtötung unerwünschter Vegetation.

12. Verwendung einer Adjuvanszusammensetzung nach Anspruch 10 zur Herstellung einer herbiziden Zusammensetzung gemäß mindestens einem der Ansprüche 1 bis 9.

## Revendications

1. Composition herbicide comprenant :
(a) de l'acide de glyphosate ou un dérivé ou un sel de celui-ci acceptable du point de vue agricole, et
(b) un composant de tensioactif ayant la formule 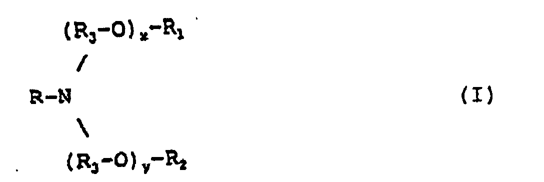 ou une forme rendue quaternaire de celui-ci 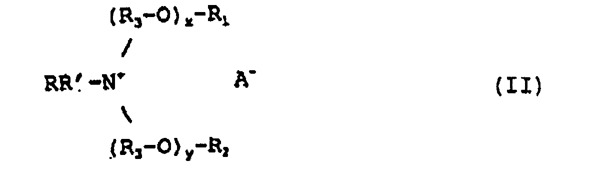 ou le dérivé d'oxyde d'amine de celui-ci 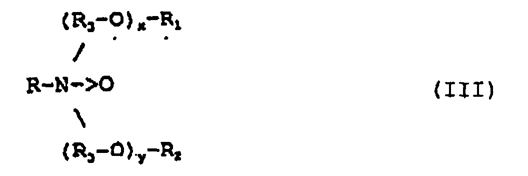
dans lesquelles R et R' représentent un hydrogène ou un alkyle ayant 1 à 3 atomes de carbone, R1 et R2 représentent chacun indépendamment un groupe alkyle ou alcényle à chaîne linéaire ou ramifiée ayant de 4 à 24 atomes de carbone, R₃ dans chaque groupe (R₃-O) peut être le même ou différent et représente un alkylène ayant de 2 à 4 atomes de carbone, A- est un anion acceptable du point de vue agricole, et x et y sont des nombres moyens tels que x+y est dans la gamme de 2 à 160.

2. Composition selon la revendication 1 dans laquelle R1 et R2 représentent un groupe alkyle ou alcényle à chaîne linéaire ou ramifiée ayant de 8 à 18 atomes de carbone.

3. Composition selon la revendication 1 ou 2 dans laquelle le tensioactif est un tensioactif selon la formule (I).

4. Composition selon la revendication 3 où dans la formule du tensioactif R1 et R2 représentent chacun indépendamment un groupe alkyle ou alcényle à chaîne linéaire ou ramifiée ayant de 12 à 18 atomes de carbone.

5. Composition selon l'une quelconque des revendications précédentes où dans la formule de tensioactif x+y se situe dans la gamme de 4 à 100, préférablement de 6 à 50.

6. Composition selon l'une quelconque des revendications précédentes où le rapport de poids du glyphosate (exprimé en tant qu'équivalent d'acide de glyphosate) sur le composant de tensioactif total se situe dans la gamme de 1 : 5 à 20 : 1.

7. Composition selon la revendication 6 dans laquelle le rapport de poids du glyphosate (exprimé en tant qu'équivalent d'acide de glyphosate) sur le composant de tensioactif total est plus grand que 1 : 1, préférablement plus grand que 2 : 1, plus particulièrement plus grand que 5 : 1.

8. Composition selon la revendication 7 dans laquelle le rapport équivalent d'acide glyphosate/tensioactif est aussi élevé que 15 : 1.

9. Composition selon l'une quelconque des revendications 6 à 8 dans laquelle le rapport de poids du glyphosate (exprimé en tant qu'équivalent d'acide de glyphosate) sur le composant de tensioactif est environ de 8 : 1, 10 : 1 ou 12 : 1.

10. Composition d'adjuvant comprenant un tensioactif comme défini dans l'une quelconque des revendications 1 à 5, possiblement avec d'autres adjuvants, comme du solvant ou du diluant tel que de l'eau ou un alcool inférieur, tel que de l'isopropanol ou du glycol, un sel d'ammonium inorganique, des colorants, des épaississants, stabilisants et/ou d'autres tensioactifs.

11. Utilisation d'une composition selon l'une quelconque des revendications 1 à 9 pour le contrôle ou la destruction de végétation non voulue.

12. Utilisation d'une composition d'adjuvant selon la revendication 10 pour la préparation d'une composition herbicide selon l'une quelconque des revendications 1 à 9.
